# EUROPÄISCHE PATENTANMELDUNG

(11) **EP 4 818 536 A1**
(43) Veröffentlichungstag der Anmeldung: **07.10.2026**
(21) Anmeldenummer: 26163360.6
(22) Anmeldetag: 09.03.2026
(51) Int. Cl.: F16B 25/00

(54) **BEFESTIGER UND EIN VERFAHREN ZUM BEFESTIGEN EINER DÄMMSTOFFPLATTE AN EINEM VERANKERUNGSGRUND**

(30) Priorität: 02.04.2025 DE 102025112847
(71) Anmelder: fischerwerke GmbH & Co. KG, 72178 Waldachtal (DE)
(72) Erfinder: Duffner, Philipp, 72181 Starzach-Bierlingen (DE)
(74) Vertreter: Suchy, Ulrich Johannes

(57) **Zusammenfassung**

Die Erfindung betrifft einen Befestiger (1) zum Befestigen einer Dämmstoffplatte (24), mit einer Schraube (2) aus Metall, die ein Schraubengewinde (8) aufweist und mit einem mit der Schraube (2) verbundenen Haltekörper (3) aus Kunststoff, der am hinteren Ende der Schraube (2) angeordnet ist, wobei der Haltekörper (3) ein Dämmstoffgewinde (12) aufweist. Um ein verbessertes Setzbild zu erreichen, schlägt die Erfindung vor, dass sich auf einer hinteren, dem Schraubengewinde (8) abgewandten Seite des Dämmstoffgewindes (12) ein mit dem Haltekörper (3) dreh- und zugfest verbundener Verlängerungsschaft (4) ohne Gewinde anschließt. Beim Setzen dringt zunächst das Dämmstoffgewinde (12) vollständig von der Dämmstoffplatte (24) ein, bevor die Schraube (2) vorne die Dämmstoffplatte (24) überragt und in den Bereich des Verankerungsgrunds (25) gelangt.

## Beschreibung

Die Erfindung betrifft einen Befestiger mit den Merkmalen des Oberbegriffs des Anspruchs 1 sowie ein Verfahren zum Befestigen einer Dämmstoffplatte an einem Verankerungsgrund mit den Merkmalen des Oberbegriffs des Anspruchs 9.

Aus der Druckschrift DE 10 2004 064114 B4 ist ein Befestiger bekannt, mit dem Dämmplatten an einem Untergrund aus Holz, Beton oder dergleichen befestigt werden kann. Der Befestiger weist einen schraubenartigen Stift auf, der mit einem Haltekörper mit einem Dämmstoffgewinde umspritzt ist. Das Dämmstoffgewinde weist einen deutlich größeren Gewindedurchmesser als der Stift auf, so dass er einem Dämmstoff guten Halt geben kann. Die Druckschrift offenbart eine Variante mit und eine Variante ohne Dübel. Beim Setzen des Befestigers schraubt sich das Gewinde des Stifts gleichzeitig mit dem Dämmstoffgewinde ein. Während also das Gewinde des Stifts in den Untergrund oder in einen Dübel im Untergrund eindringt, schneidet sich gleichzeitig das Dämmstoffgewinde in den Dämmstoff ein. Insbesondere bei besonders festen Dämmstoffen, wie Holzfasern, kann es an der Sichtseite zu Aufwerfungen und Ablösungen im Bereich des Befestigers kommen, was zu Nacharbeiten vor einer weiteren Bearbeitung, beispielweise einem Verputzen, der Oberfläche führt.

Aufgabe der Erfindung ist es daher, einen Befestiger beziehungsweise ein Verfahren zum Befestigen zu schaffen, der beziehungsweise das ein möglichst nacharbeitungsfreies Setzbild ermöglicht.

Diese Aufgabe wird erfindungsgemäß durch die Merkmale des Anspruchs 1 und des Anspruchs 9 gelöst. Der erfindungsgemäße Befestiger dient zum Befestigen einer Dämmplatte, insbesondere aus Holzfasern, an einem Verankerungsgrund. Der Verankerungsgrund ist insbesondere aus Holz oder Beton oder ist beispielsweise ein Mauerwerk. Der Befestiger erstreckt sich entlang einer Längsachse von einem in Einbringrichtung vorderen Ende bis zu einem hinteren Ende. Er weist eine Schraube aus Metall, insbesondere aus Stahl, auf, die ein Schraubengewinde aufweist. Das Schraubengewinde ist insbesondere kein Maschinengewinde, sondern beispielsweise ein Holzschrauben-Gewinde, und kann mehrgängig sein. Die Schraube kann einen Schraubenkopf aufweisen, muss dies aber nicht.

Außerdem weist der Befestiger einen Haltekörper aus Kunststoff zum Halten des Dämmstoffs auf. Der Haltekörper ist unlösbar dreh- und zugfest mit der Schraube verbunden. "Unlösbar" meint, dass bei der bestimmungsgemäßen Verwendung die Verbindung aufrechterhalten wird, also nicht etwa im Sinne einer Kupplung aufgehoben wird. "Zugfest" meint eine Festigkeit gegenüber einer axialen Bewegung der Elemente voneinander weg. Dies schließt eine druckfeste Verbindung nicht aus. Jedoch ist eine axialfeste Verbindung, also eine zug- und druckfeste Verbindung erfindungsgemäß nicht erforderlich, um den Befestiger erfindungsgemäß verwenden zu können. Es ist jedoch eine axialfeste Verbindung bevorzugt, um ein ungewolltes Separieren der Elemente vor der Verwendung auszuschließen. Insbesondere ist die Schraube umspritzt mit dem Haltekörper, wodurch eine dreh- und axialfeste Verbindung erreicht werden kann.

Der Haltekörper weist ein Dämmstoffgewinde auf. Um Dämmstoffen einen Halt zu geben, sind größere Hinterschneidungen notwendig, als in Holz oder in einem Dübel. Daher hat das Dämmstoffgewinde einen größeren maximalen Gewindedurchmesser als das Schraubengewinde und insbesondere auch eine größere Flankenhöhe als das Schraubengewinde. Insbesondere ist der maximale Gewindedurchmesser des Dämmstoffgewindes mindestens um das 4-Fache, vorzugsweise mindestens um das 6-Fache, größer als der maximale Gewindedurchmesser des Schraubengewindes. Besonders bevorzugt ist der maximale Gewindedurchmesser des Dämmstoffgewinde mindestens um das 8-Fache größer als der des Schraubengewindes.

Kennzeichnend für die Erfindung ist, dass sich auf einer hinteren, dem Schraubengewinde abgewandten Seite des Dämmstoffgewindes ein mit dem Haltekörper dreh- und zugfest verbundener Verlängerungsschaft anschließt. Auch hier ist die Verbindung vorzugsweise axialfest.

Die Verbindung von Haltekörper und Verlängerungsschaft kann auch indirekt sein, es kann also insbesondere die Verlängerung nur direkt mit der Schraube verbunden sein, die wiederum direkt mit dem Haltekörper verbunden ist. Insbesondere ist der Haltekörper jedoch einstückig aus Kunststoff mit dem Verlängerungsschaft.

Der Verlängerungsschaft weist kein Gewinde auf oder jedenfalls ein deutlich kleineres Gewinde als das Halteelement. So entspricht die Flankenhöhe dieses möglichen Gewindes des Verlängerungsschafts maximal 50 %, vorzugsweise maximal 30 %, der maximalen Flankenhöhe des Dämmstoffgewindes. Es ist möglich, dass das Dämmstoffgewinde in dieses Gewinde übergeht. In diesem Fall würde jener Gewindeteil Richtung hinteres Ende des Befestigers dem Verlängerungsschaft gedanklich zugeordnet werden, dessen Flankenhöhe maximal 50 %, vorzugsweise maximal 30 %, der maximalen Flankenhöhe des Dämmstoffgewindes entspricht.

Die Länge des Verlängerungsschafts entspricht mindestens dem 2,5-Fachen, insbesondere mindestens dem 3-Fachen, und vorzugsweise mindestens dem 3,5-Fachen, eines maximalen Kerndurchmessers des Dämmstoffgewindes.

Die Erfindung sieht eine Variante mit und eine Variante ohne eine Dübelhülse vor. Im Fall ohne Dübelhülse kann die Schraube direkt in den Untergrund, insbesondere aus Holz, mit oder ohne Vorbohren eingeschraubt werden. Bei einem Untergrund, beispielsweise aus Beton oder Mauerwerk, wird die Dübelhülse in ein Loch im Untergrund eingebracht und die Schraube anschließend in die Dübelhülse eingeschraubt.

Ein derartiger Befestiger ermöglich ein erfindungsgemäßes Verfahren, bei dem der Befestiger mit der Schraube voraus in die Dämmstoffplatte eingebracht und das Dämmstoffgewinde in die Dämmstoffplatte eingeschraubt wird, derart dass das Dämmstoffgewinde im Wesentlichen vollständig von der Dämmstoffplatte aufgenommen ist, bevor die Schraube vorne die Dämmstoffplatte überragt und in den Bereich des Verankerungsgrunds gelangt. Der Befestiger schraubt sich somit zuerst in den Dämmstoff und dann erst die Schraube in den Verankerungsgrund beziehungsweise in die Dübelhülse. Dies hat den Vorteil, dass beim Einschneiden des Dämmstoffgewindes in die Dämmstoffplatte keine axialen Kräfte dadurch wirken können, dass das Schraubgewinde nicht sofort im Holz oder in der Dübelhülse greift, also ein unterschiedlicher Vortrieb in Dämmstoff und Untergrund vorherrscht. Es hat sich gezeigt, dass durch die nicht auftretenden axialen Kräfte es zu einem deutlich leichteren und sauberen Einschneiden kommt, so dass das Setzbild deutlich verbessert wird. Das Dämmstoffgewinde gelangt deutlich unter die sichtseitige Oberfläche der Dämmstoffplatte, während die Schraube in den Untergrund beziehungsweise in die Dübelhülse eingeschraubt wird. Der Verlängerungsschaft ist insbesondere so lang, dass er planmäßig mit der Oberfläche der Dämmstoffplatte bündig abschließt. Er kann so für eine visuelle Setzkontrolle einer korrekten Befestigung dienen. Außerdem bleibt der Befestiger bis zum Abschluss des Befestigungsvorgangs gut erreichbar. Es ist also kein besonders langes Werkzeug notwendig, um den Befestiger im Dämmstoff zu erreichen. Auch wird durch ein bündiges Abschließen mit der Oberfläche der Dämmstoffplatte ein Loch oder dergleichen vermieden, welches anschließend durch ein zusätzliches Element oder Putz verschlossen werden müsste.

Vorzugsweise ist der Verlängerungsschaft in Richtung der Längsachse länger als das Dämmstoffgewinde in Richtung der Längsachse, insbesondere länger als 30 mm. Insbesondere ist der Verlängerungsschaft im Wesentlichen so lang wie das Schraubgewinde. Hierdurch kann für typische Verankerungsgründe ein ausreichender Weg der Schraube in den Untergrund beziehungsweise in den Dübel gewährleistet werden, wenn das hintere Ende des Verlängerungsschafts mit der Oberfläche der Dämmstoffplatte abschließt.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Damit der Befestiger sich möglichst leicht setzen lässt, schlägt die Erfindung vor, dass der Verlängerungsschaft über mindestens die Hälfte seiner Länge einen zylindrischen Schaftabschnitt aufweist, weil diese Form eine geringe Reibung im Dämmstoff bewirkt. Dahinter weist der Verlängerungsschaft vorzugsweise einen Antriebsabschnitt auf, mit insbesondere einem größeren Außendurchmesser als der Schaftabschnitt. Hierdurch wird erreicht, dass der Befestiger an seinem hinteren Ende am Umfang eng und somit dicht an dem umgebenden Dämmstoff abschließt. Auch hierdurch wird ein gutes, da spaltfreies Setzbild erreicht.

Vorzugsweise ist am hinteren Ende des Verlängerungsschafts eine Werkzeugaufnahme angeordnet. In Kombination mit dem genannten Antriebsabschnitt mit größerem Außendurchmesser wird eine gute Stabilität, insbesondere im Sinne von Torsionssteifigkeit, des Befestigers erreicht. Denkbar wäre auch, die Werkzeugaufnahme vertieft im Befestiger im Bereich des Haltekörpers anzuordnen, also den Verlängerungsschaft rohrförmig auszubilden.

Im Sinne der genannten Stabilität schlägt die Erfindung vor, dass der Verlängerungsschaft einen maximalen Außendurchmesser aufweist, der mindestens dem 1,1-Fachen, insbesondere mindestens dem 1,2-Fachen, und vorzugsweise mindestens dem 1,3-Fachen, des maximalen Kerndurchmessers des Dämmstoffgewinde entspricht. Gleichzeitig wird hierdurch ein zu großer Kerndurchmesser des Dämmstoffgewindes vermieden, durch den sehr hohe Reibkräfte erzeugt würden.

Vorzugsweise ist die Steigung des Dämmstoffgewindes zumindest abschnittsweise geringer als die des Schraubengewindes. Hierdurch wird ein Heranziehen der Dämmplatte an den Untergrund erreicht, da im Untergrund ein größerer Vortrieb vorherrscht als im Dämmstoff.

Die Erfindung wird nachfolgend anhand eines Ausführungsbeispiels erläutert.

### Es zeigen:

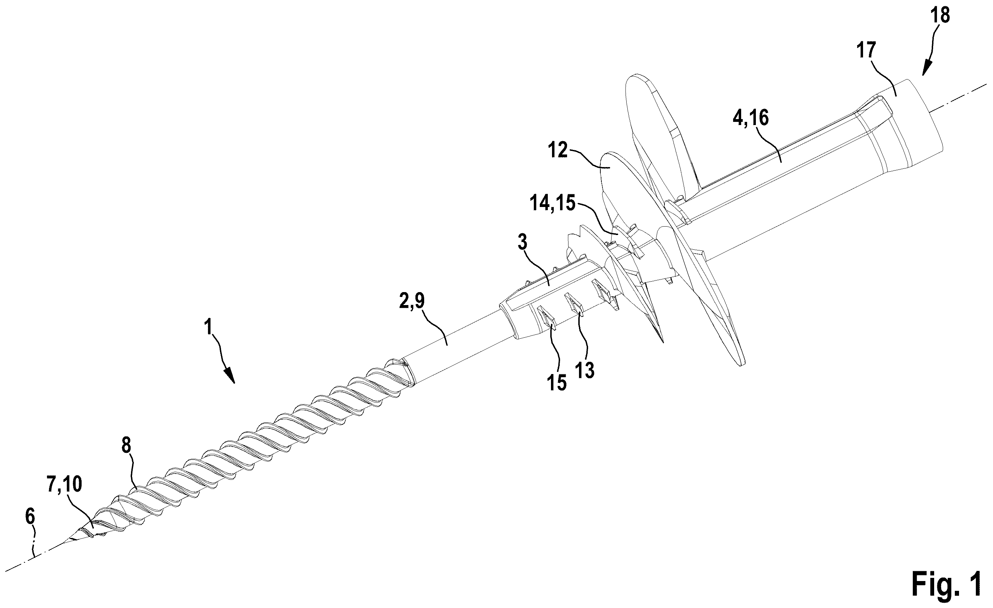

- Figur 1: einen erfindungsgemäßen Befestiger ohne eine Dübelhülse in einer perspektivischen Ansicht;
- Figur 2: denselben Befestiger mit einer Dübelhülse in einem Längsschnitt; und
- Figur 3: denselben Befestiger ohne Dübelhülse während der Befestigung einer Dämmstoffplatte an einem Verankerungsgrund in einer Seitenansicht.

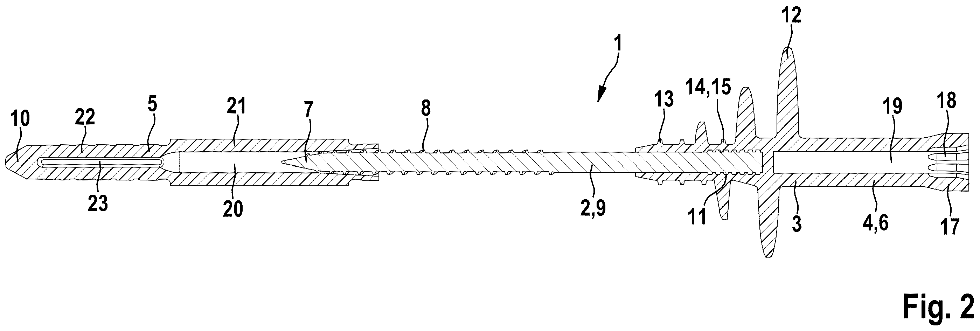

Der in den Figuren gezeigte Befestiger 1 weist eine Schraube 2 aus Metall, nämlich Stahl, einen Haltekörper 3 aus Kunststoff, nämlich glasfaserverstärktem Polyamid PA6, einen mit dem Haltekörper 3 einstückig verbundenen Verlängerungsschaft 4 sowie eine Dübelhülse 5 aus Kunststoff, nämlich Polyamid PA6, (nur in Figur 2 gezeigt) auf und erstreckt sich entlang einer Längsachse 6.

Die Schraube 2 weist eine Schraubenspitze 7 auf, von der aus sich ein Doppelgewinde als Schraubengewinde 8 mit einer Steigung, hier 10 mm, der Schraube 2 entlang der Längsachse 6 bis zu einem gewindefreien Schraubenschaft 9 erstreckt. Der Gewindedurchmesser und der Kerndurchmesser des Schraubengewindes 8 sind abgesehen von einem konischen Bereich an der Spitze konstant. Dieser jeweils konstante Durchmesser ist zugleich der maximale Gewindedurchmesser DSGmax, hier 6 mm, beziehungsweise der maximale Kerndurchmesser DSKmax, hier zwischen 4 und 5 mm. Im Falle ohne Dübelhülse 5 bildet die Schraubenspitze 7 ein vorderes Ende 10 des Befestigers 1. Der gewindefreie Schraubenschaft 9 erstreckt sich bis zum hinteren Ende der Schraube 2 und ist zylindrisch, außer im hinteren Zehntel, wo die Schraube 2 Vorsprünge 11 aufweist. Im hinteren Viertel ist die Schraube 2 von dem Haltekörper 3 umspritzt, wobei die Vorsprünge 11 für eine gute dreh- und axialfeste, also auch zugfeste Verbindung sorgen.

Der Haltekörper 3 umfasst den Umfang der Schraube 2 vollständig und ragt nach hinten über die Schraube 2 über. Er weist ein Dämmstoffgewinde 12 auf, dass vorne etwa im Bereich der Vorsprünge 11 beginnt und von einem geringen Durchmesser kontinuierlich über etwa 2,5 Umdrehungen auf einen maximalen Gewindedurchmesser DDGmax des Dämmstoffgewindes 12 von 55 mm ansteigt und dann endet. Der maximale Gewindedurchmesser DDGmax des Dämmstoffgewindes 12 entspricht somit etwa dem 9-Fachen des maximalen Gewindedurchmessers DSGmax des Schraubengewindes 8. Die Steigung des Dämmstoffgewindes beträgt vorne 10 mm und geht in der Mitte zu einer Steigung von 9 mm über. Vor dem Dämmstoffgewinde 12 sind über den Umfang verteilt Dämmstoffgewindesegmente 13, die das Dämmstoffgewinde 12 nach vorne bis fast bis zum vorderen Ende des Haltekörpers 3 mit gleicher Steigung und geringer Flankenhöhe fortsetzen. Parallel zum Dämmstoffgewinde 12 erstreckt sich ein Zweitgewinde 14 mit einem maximalen Gewindedurchmesser DZGmax von 14 bis 15 mm auf. Das Zweitgewinde 14 hat eine durchgängige Steigung von 9 mm und besteht aus mehreren Zweitgewindesegmenten 15, die sich jeweils nur über maximal ein Viertel des Umfangs erstrecken. Das Zweitgewinde 14 setzt sich mit diesen Zweitgewindesegmenten 15 bis fast zum vorderen Ende des Haltekörpers 3 fort.

Der Kern der beiden Gewinde 12, 14 ist im vorderen Bereich zylindrisch und weitet sich dann nach hinten konisch auf in einem Längsbereich, der etwa der hinteren Hälfte der Vorsprünge 11 entspricht. Dahinter ist der Kern wiederum zylindrisch und weist dementsprechend dort den maximalen Kerndurchmesser DDKmax des Dämmstoffgewindes 12, hier etwa 10 mm, auf.

Der Haltekörper 3 endet hinten gedanklich mit dem Ende des Dämmstoffgewindes 12 und geht einstückig in den Verlängerungsschaft 4 über. Dabei schließt sich an den Haltekörper 3 ein zylindrischer Schaftabschnitt 16 des Verlängerungsschafts 4 an, dessen Durchmesser DSA gleich ist wie der maximale Kerndurchmesser DDKmax des Dämmstoffgewindes 12. An den Schaftabschnitt 16 schließt sich im hinteren Viertel des Verlängerungsschafts 4 ein Antriebsabschnitt 17 an. Am Antriebsabschnitt 17 erweitert sich der Außendurchmesser zunächst konisch und geht nach hinten wiederum in einen zylindrischen Abschnitt über. Der maximale Durchmesser des Antriebsabschnitts 17 und somit auch der maximale Durchmesser DVmax des Verlängerungsschafts 4 beträgt 13 mm. Dies entspricht etwa dem 1,3-Fachen des maximalen Kerndurchmessers DDKmax des Dämmstoffgewindes 12. Die Länge LV des Verlängerungsschafts 4 beträgt etwa 36 mm und entspricht somit etwa dem 3,6-Fachen des maximalen Kerndurchmessers DDKmax des Dämmstoffgewindes 12.

Am hinteren Ende des Verlängerungsschafts 4 ist eine Werkzeugaufnahme 18 in Form eines Innensterns angeordnet. Die Werkzeugaufnahme 18 erstreckt sich längs über die Länge des Antriebsabschnitts 17. Axial vorne schließt sich an die Werkzeugaufnahme 18 eine zylindrische Höhlung 19 an, die bis kurz vor die Schraube 2 reicht.

Wird eine Dübelhülse 5 benötigt, so steckt die Schraube 2 wie in Figur 2 dargestellt vormontiert mit einem Teil des Schraubengewindes 8 in der Dübelhülse 5. Die Dübelhülse 5 weist in der hinteren Hälfte eine Schafthülse 20 mit außen aufgesetzten Rippen 21 und in der vorderen Hälfte eine Spreizhülse 22 mit ähnlichem Außendurchmesser aber deutlich geringerem Innendurchmesser auf. Über einen Teil ihrer Länge wird die Spreizhülse 22 quer von einem Schlitz 23 durchsetzt. Durch Einschrauben der Schraube 2 in die Spreizhülse 22 kann diese daher verspreizt werden.

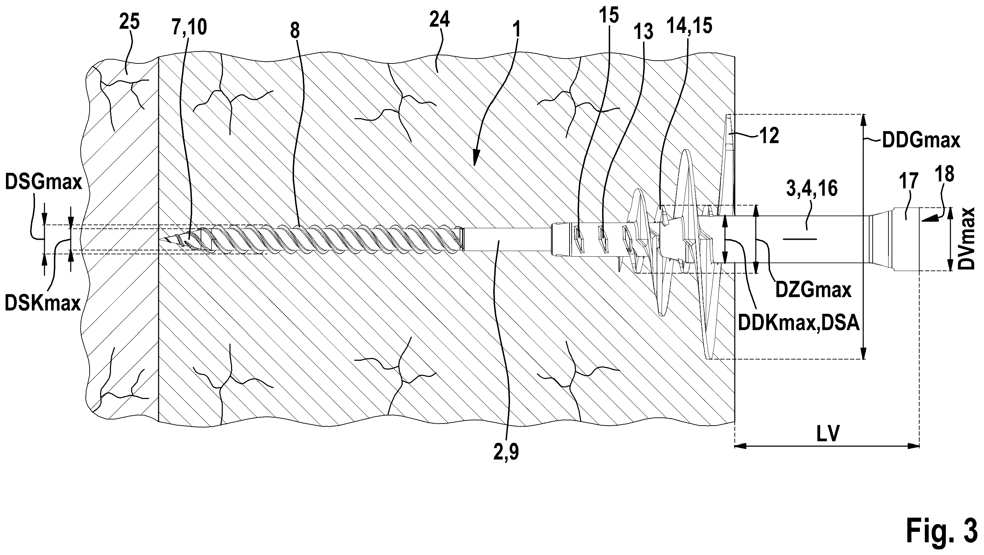

Anhand von Figur 3 wird nachfolgend die Verwendung des Befestigers 1 zur Befestigung einer Dämmstoffplatte 24 aus Holzfasern an einem Verankerungsgrund 25 aus Holz erläutert: Zunächst wird die Dämmstoffplatte 24 auf den Verankerungsgrund 25 aufgesetzt. Danach wird der Befestiger 1 ohne die Dübelhülse 5 und ohne Vorbohren in die Dämmstoffplatte 24 eingeschraubt. Dabei greift zunächst nur das Schraubengewinde 8, bis der Haltekörper 3 mit dem Dämmstoffgewinde 12 und dem Zweitgewinde 14 ebenfalls in den Dämmstoff eindringt, wobei das Dämmstoffgewinde 12 sich ihr Gegengewinde wie zuvor die Schraube 2 selbst in die Dämmstoffplatte 24 einschneidet. Insbesondere das Dämmstoffgewinde 12 sorgt für einen zusätzlichen Vortrieb. Erst wenn das Dämmstoffgewinde 12 vollständig von der Dämmstoffplatte 24 aufgenommen ist, trifft die Schraubenspitze 7 auf den Verankerungsgrund 25. Dieser Moment ist in Figur 2 dargestellt. Durch weiteres Drehen des Befestigers 1 wird die Schraube 2 in den Verankerungsgrund 25 eingeschraubt. Dadurch dass die Steigung des Dämmstoffgewindes 12 teilweise etwas geringer als die der Schraube 2 ist, wird die Dämmstoffplatte 24 dabei an den Verankerungsgrund 25 gezogen, so dass eine spaltfreie Anlage sichergestellt ist. Gleichzeitig mit dem Eindringen der Schraube 2 in den Verankerungsgrund 25 dringt der Verlängerungsschaft 4 in die Dämmstoffplatte 24 ein. Wenn das hintere Ende des Befestigers 1 plan mit der Dämmstoffplatte 24 ist, gibt dies dem Verwender das Signal, dass die Verankerung abgeschlossen ist. Die Länge des Verlängerungsschafts 4 entspricht somit derjenigen Länge, mit der die Schraube 2 im Verankerungsgrund 25 verankert wird. Der Einschnitt des Dämmstoffgewindes 12 in die Dämmstoffplatte 24 ist im fertig gesetzten Zustand kaum zu erkennen. Lediglich das hintere Ende des Antriebsabschnitts 17 mit der Werkzeugaufnahme 18 ist erkennbar, was ein sehr gutes Setzbild ergibt.

Bei einem Verankerungsgrund 25, der kein Einschrauben der Schraube 2 erlaubt, wie beispielsweise Beton oder Mauerwerk, kann der Befestiger 1 mit der Dübelhülse 5 verwendet werden. Es wird in diesem Fall ein Loch durch die Dämmstoffplatte bis in den Verankerungsgrund vorgebohrt (nicht dargestellt). Der Durchmesser des Lochs entspricht dem Durchmesser der Spreizhülse 22. Der Befestiger 1 wird mit der Dübelhülse 5 voraus in dieses Loch gesteckt bis die Rippen 21 auf der Außenseite des Verankerungsgrunds 25 aufsitzen. Die Schafthülse 20 ist so bemessen und die Schraube 2 so weit in der Dübelhülse 5 vormontiert, dass das vordere Ende des Haltekörpers 3 beim Aufsitzen der Rippen 21 ebenfalls gerade in den Bereich der Dämmstoffplatte 24 kommt. Das weitere Eintreiben des Befestigers 1 erfolgt drehend wie zuvor beschrieben bei einem Verankerungsgrund 25 aus Holz. Während das Dämmstoffgewinde 12 in die Dämmstoffplatte 24 eingedreht wird, dringt die Schraube 2 in die Schafthülse 20 ein, wobei die Rippen 21 ein Mitdrehen in der Dämmstoffplatte 24 verhindern. Bevor die Schraube 2 die Dämmstoffplatte 24 in Richtung des Verankerungsgrunds 25 überragt, ist das Dämmstoffgewinde 12 vollständig in der Dämmstoffplatte 24 versenkt. Durch weiteres Drehen dringt die Schraube 2 in die Spreizhülse 22 und verspreizt diese, während der Verlängerungsschaft 4 vollständig in der Dämmstoffplatte 24 versenkt wird, wie zuvor beschrieben.

### Bezugszeichenliste

- 1: Befestiger
- 2: Schraube
- 3: Haltekörper
- 4: Verlängerungsschaft
- 5: Dübelhülse
- 6: Längsachse
- 7: Schraubenspitze
- 8: Schraubengewinde
- 9: Schraubenschaft
- 10: vorderes Ende
- 11: Vorsprung
- 12: Dämmstoffgewinde
- 13: Dämmstoffgewindesegment
- 14: Zweitgewinde
- 15: Zweitgewindesegmente
- 16: Schaftabschnitt
- 17: Antriebsabschnitt
- 18: Werkzeugaufnahme
- 19: Höhlung
- 20: Schafthülse
- 21: Rippe
- 22: Spreizhülse
- 23: Schlitz
- 24: Dämmstoffplatte
- 25: Verankerungsgrund
- DDGmax: Maximaler Gewindedurchmesser des Dämmstoffgewindes 12
- DDKmax: Maximaler Kerndurchmesser des Dämmstoffgewindes 12
- DSA: Durchmesser des Schaftabschnitts 16
- DSGmax: Maximaler Gewindedurchmesser der Schraube 2
- DSKmax: Maximaler Kerndurchmesser der Schraube 2
- DVmax: Maximaler Durchmesser des Verlängerungsschafts 4
- DZGmax: Maximaler Gewindedurchmesser des Zweitgewindes 14
- LV: Länge des Verlängerungsschafts 4

## Patentansprüche

1. Befestiger (1) zum Befestigen einer Dämmstoffplatte (24), insbesondere aus Holzfasern, an einem Verankerungsgrund (25), wobei sich der Befestiger (1) entlang einer Längsachse (6) von einem in Einbringrichtung vorderen Ende (10) bis zu einem hinteren Ende erstreckt,
mit einer Schraube (2) aus Metall, die ein Schraubengewinde (8) aufweist,
und mit einem mit der Schraube (2) unlösbar dreh- und zugfest verbundenen Haltekörper (3) aus Kunststoff, der am hinteren Ende der Schraube (2) angeordnet ist, wobei der Haltekörper (3) ein Dämmstoffgewinde (12) aufweist und wobei insbesondere der maximale Gewindedurchmesser (DDGmax) des Dämmstoffgewindes (12) mindestens um das 4-Fache, vorzugsweise mindestens um das 6-Fache, größer als der maximale Gewindedurchmesser (DSGmax) des Schraubengewindes (8) ist,
**dadurch gekennzeichnet, dass** sich auf einer hinteren, dem Schraubengewinde (8) abgewandten Seite des Dämmstoffgewindes (12) ein mit dem Haltekörper (3) dreh- und zugfest verbundener Verlängerungsschaft (4) anschließt,
der kein Gewinde oder ein Gewinde aufweist mit einer Flankenhöhe, die maximal 50%, vorzugsweise maximal 30%, der maximalen Flankenhöhe des Dämmstoffgewindes (12) entspricht,
und dass die Länge (LV) des Verlängerungsschafts (4) mindestens dem 2,5-Fachen, insbesondere mindestens dem 3-Fachen, eines maximalen Kerndurchmessers (DDKmax) des Dämmstoffgewinde (12) entspricht.

2. Befestiger (1) nach Anspruch 1, **dadurch gekennzeichnet, dass** der Verlängerungsschaft (4) länger als das Dämmstoffgewinde (12), insbesondere länger als 30 mm, ist.

3. Befestiger (1) nach Anspruch 1 oder Anspruch 2, **dadurch gekennzeichnet, dass** der Verlängerungsschaft (4) einstückig mit dem Haltekörper (3) ist.

4. Befestiger (1) nach einem oder mehreren der vorstehenden Ansprüche, **dadurch gekennzeichnet, dass** der Verlängerungsschaft (4) über mindestens die Hälfte seiner Länge (LV) einen zylindrischen Schaftabschnitt (16) und dahinter einen Antriebsabschnitt (17) aufweist, mit insbesondere einem größeren Außendurchmesser als der Schaftabschnitt (16).

5. Befestiger (1) nach einem oder mehreren der vorstehenden Ansprüche, **dadurch gekennzeichnet, dass** am hinteren Ende des Verlängerungsschafts (4) eine Werkzeugaufnahme (18) angeordnet ist.

6. Befestiger (1) nach einem oder mehreren der vorstehenden Ansprüche, **dadurch gekennzeichnet, dass** der Verlängerungsschaft (4) einen maximalen Außendurchmesser aufweist, der mindestens dem 1,1-Fachen, insbesondere mindestens dem 1,2-Fachen, des maximalen Kerndurchmessers (DDKmax) des Dämmstoffgewinde (12) entspricht.

7. Befestiger (1) nach einem oder mehreren der vorstehenden Ansprüche, **dadurch gekennzeichnet, dass** die Steigung des Dämmstoffgewindes (12) zumindest abschnittsweise geringer als die Steigung des Schraubengewindes (8) ist.

8. Befestiger (1) nach einem oder mehreren der vorstehenden Ansprüche, **dadurch gekennzeichnet, dass** der Befestiger (1) eine Dübelhülse (5) umfasst, in die die Schraube (2) zum Aufspreizen der Dübelhülse (5) einschraubbar ist.

9. Verfahren zum Befestigen einer Dämmstoffplatte (24), insbesondere aus Holzfasern, an einem Verankerungsgrund (25), insbesondere aus Holz, **dadurch gekennzeichnet, dass** ein Befestiger (1) nach einem oder mehreren der vorstehenden Ansprüche mit der Schraube (2) voraus in die Dämmstoffplatte (24) eingebracht und das Dämmstoffgewinde (12) in die Dämmstoffplatte (24) eingeschraubt wird, derart dass das Dämmstoffgewinde (12) im Wesentlichen vollständig von der Dämmstoffplatte (24) aufgenommen ist, bevor die Schraube (2) vorne die Dämmstoffplatte (24) überragt und in den Bereich des Verankerungsgrunds (25) gelangt.
